# EUROPEAN PATENT SPECIFICATION

(11) **EP 3 225 867 B1**
(45) Date of publication and mention of the grant of the patent: **08.05.2019**
(21) Application number: 17163496.7
(22) Date of filing: 29.03.2017
(51) Int. Cl.: F16D 13/72

(54) **PLATE HAVING BETTER COOLING SYSTEM**
PLATTE MIT BESSEREM KÜHLSYSTEM
PLAQUE AYANT UN MEILLEUR SYSTÈME DE REFROIDISSEMENT

(30) Priority: 30.03.2016 TR 201604123
(43) Date of publication of application: 04.10.2017
(73) Proprietor: Valeo Otomotiv Sanayi ve Ticaret A.S., 34854 Istanbul (TR)
(72) Inventor: CAKMAK, Tolga, 16240 BURSA (TR); PEHLIVAN, Ahmet Koray, 16240 BURSA (TR)
(74) Representative: Cardon, Nicolas

(56) References cited:
- CN-U- 204 755 644
- DE-A1- 19 930 966
- DE-A1-102014 225 574

## Description

### TECHNICAL FIELD

The present invention relates to a plate having better cooling system. The present invention relates also to improvement of the thermo-mechanical performance of pressure plate in the clutch system used in vehicles having internal combustion engine with dry clutching.

### KNOWN STATE OF THE ART

In vehicles having internal combustion engine, there are dry friction clutches positioned between the engine output and the gear box shaft and which provide power transfer to the gear box by means of friction bond.

In general, these dry friction clutches provide clutching as a result of tightening and rubbing of friction material, connected onto a disc, between two metal plates. These two metal plates are preferably the pressure plate and the flywheel. The tightening process is realized by using the support provided by the clutch cover by means of helical springs or by means of a belleville type diaphragm spring.

Clutch is needed for transferring engine torque to wheels during beginning of the movement from the stop position of a vehicle which has a manual gear box. In this step, since the rubbing materials will generate heat, this heat is stored as temperature increase in the flywheel and in the pressure plate. Particularly under the heavy load and agricultural equipment driving conditions, in the process of repetitive usage of the clutch in short durations, there is no sufficient cooling time for dissipating the occurring heat. This temperature increase may lead to breakages in the pressure plate and in the flywheel and burning of the friction linings. Together with excessive temperature increase, the strength of the materials used in the clutch decreases and the friction characteristics change. This is an undesired condition.

CN204755644U discloses a plate in order to be used in a friction clutch mechanism provided between the engine and the gear box in motor vehicles and comprising an annular body having inner diameter and outer diameter, at least one friction surface in order to contact with the friction disc, at least one ventilation groove provided on an imaginary plane defined in a parallel manner in the axial distance with respect to said friction surface and provided along a curve extending from the inner diameter of said body towards the outer diameter of said body. Also, DE19930966A1 and DE102014225574A1 disclose plate comprising an annular body having inner diameter and outer diameter, at least one friction surface in order to contact with a friction disc, and at least one ventilation groove provided on an imaginary plane defined in a parallel manner in the axial distance with respect to said friction surface.

In order to solve the abovementioned problem, a novel pressure plate is designed.

### BRIEF DESCRIPTION OF THE INVENTION

The present invention relates to a pressure plate having a better cooling system, for bringing new advantages to the related abovementioned technical field.
The main object of the present invention is to provide a pressure plate which reduces heating problem.
In order to realize all of the abovementioned objects and the objects which are to be deducted from the detailed description below, the present invention is a plate according to claim 1. The invention is intended to be used in a friction clutch mechanism provided between the engine and the gear box in motor vehicles and comprising an annular body having inner diameter and outer diameter, at least one friction surface in order to contact with the friction disc, at least one ventilation groove provided on an imaginary plane defined in a parallel manner in the axial distance with respect to said friction surface and provided along a curve extending from the inner diameter of said body towards the outer diameter of said body.
The subject matter plate comprises a symmetry plane which is perpendicular to said imaginary plane and a symmetry groove with respect to said symmetry plane of said ventilation groove.
The invention can exhibit one or another of the characteristics described below, combined with one another or taken independently of one another.
- In a preferred embodiment of the present invention, the symmetry plane passes through the center of the plate.
- The symmetry plane passes through the axis of revolution of the plate.
- In a preferred embodiment of the present invention, the imaginary plane is located between friction surface and a cord.
- In a preferred embodiment of the present invention, the ventilation groove is provided in arc form and the axis of the arc form is arranged radially offset in relation to the axis of revolution.
- Advantageously, the ventilation groove extends from the outer diameter of the plate towards the inner diameter of the plate.
- In another preferred embodiment of the present invention, the groove group, which consists of said ventilation groove and said symmetry groove and said symmetry plane, is multiplied peripherally around said body.
- In another preferred embodiment of the present invention, at least 15 degrees are provided between two adjacent symmetry planes.
- The plate comprises pluralities of columns 34 formed by the intersection of ventilation grooves and symmetry grooves.
- In another preferred embodiment of the present invention, in order to increase the convection area, said ventilation groove has a circular or rectangular cross section.
- In another preferred embodiment of the present invention, the ventilation groove and the symmetry groove cross each other along the symmetry plane.
- The plate can be pressure plate.
- The plate can be an inertia plate.
This plate according to the present invention has the advantage of increasing the heat convection surface.

A further object of the invention is to propose a friction clutch mechanism comprising a cover, a belleville spring mounted inside of the cover and a pressure plate as defined above, said pressure plate comprising means for providing linear contact with the belleville spring.
The further object of the invention can exhibit one or another of the characteristics described below, combined with one another or taken independently of one another.
- In a preferred embodiment of the present invention, means are a circular cord.
- The cord is located opposite to the friction surface.
- Advantageously, the cord can be discontinuous.
- Alternatively, the cord can be continuous.
- Preferably, on the imaginary plane located between the cord and the friction surface, grooves are provided which allow passage of air for the cooling.
This friction clutch mechanism according to the further object of the invention has the advantage of increasing the heat convection surface inside of the pressure plate without changing the external envelope of the friction clutch mechanism.

### BRIEF DESCRIPTION OF THE FIGURES

In Figure 1, a representative cross sectional view of the subject matter pressure plate inside the clutch assembly is given.
In Figure 2, a representative isometric view of the subject matter pressure plate is given.
In Figure 3, a representative cross sectional view of the subject matter pressure plate is given.
In Figure 4, a representative cross sectional view of the subject matter pressure plate is given.

### REFERENCE NUMBERS

The parts in the figures have been numbered, and the descriptions thereof have been given below:
1- Pressure plate
20- Cord
22- Friction Surface
30- Groove
32- Symmetry Groove
34- Column
40- Inner diameter
42- Outer diameter
44- Connection Hole
5- Axis
50- Imaginary plane
52- Symmetry plane
6- Cover
7- Belleville spring

### DETAILED DESCRIPTION OF THE INVENTION

In this detailed description, the subject matter pressure plate 1 is explained with references to examples without forming any restrictive effect only in order to make the subject more understandable.

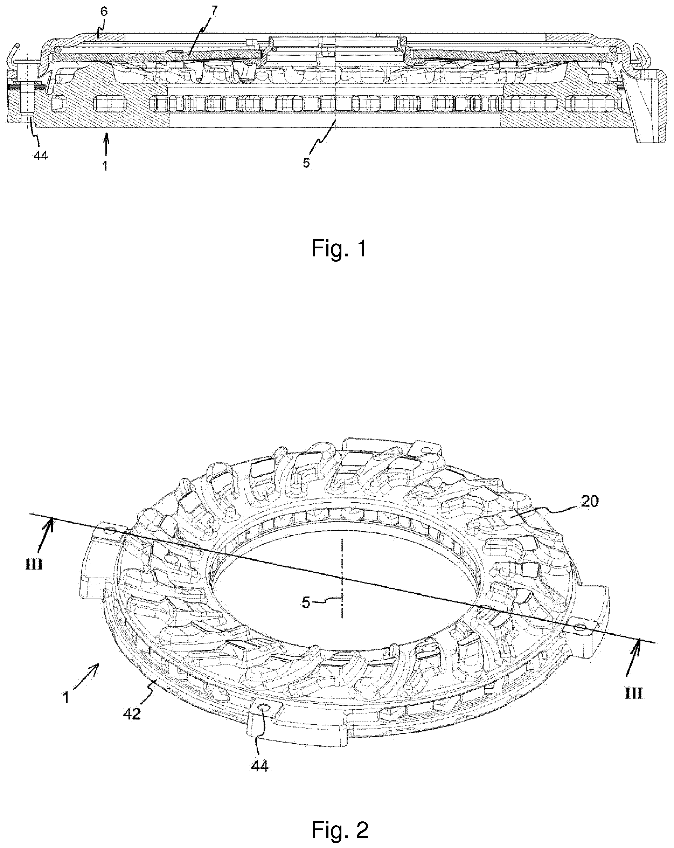

A friction clutch mechanism or the pressure plate assembly, whose representative cross section is given in Figure 1, is positioned between the engine output and the transmission shaft, and it is a mechanism providing transfer of power to the gear box by means of friction connection. The friction clutch mechanism is fastened to a flywheel (not illustrated) of the engine through a cover 6. A pressure plate 1 is positioned between the cover 6 and a friction disc (not illustrated). Said pressure plate 1 is pressed towards the friction disc preferably by means of a belleville spring 7. The belleville spring 7 is mounted inside of the cover 6. Thus, torque transmission is realized. Torque transmission is stopped when the spring force is removed from the pressure plate 1.
During the disengaging and engaging of said friction disc, heat is formed since friction occurs. Since the heat, occurring as a result of the relative movement between the disc friction lining surface and the pressure plate 1 which is in contact therewith, will lead to temperature increase in the pressure plate, the heat shall be eliminated from the pressure plate 1.
In friction clutches, the most effective factor in heat radiation is the heat transfer with convection. Therefore, with the aim of increasing heat transfer area of the pressure plate 1 by means of convection, grooves 30 or ventilation grooves 30 are formed in the inner section, and the amount of heat transferred to air by means of convection has been increased. The present invention relates to orientation of these grooves 30.

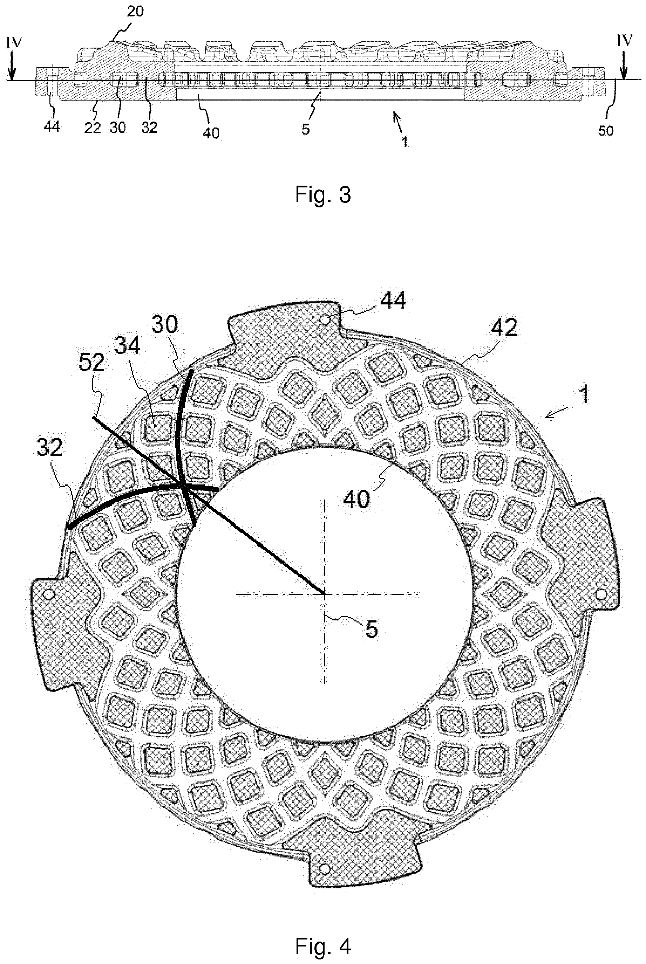

In general, the pressure plate (1), whose representative detailed view is given in Figure 2 and 3, has an annular metal form provided between the inner and outer diameters 40, 42 around an axis 5 of revolution. There are ears, for providing connection to the cover, at the outer periphery thereof. There are connection holes 44 on these ears.
On a face thereof, a friction surface 22 is provided for rubbing.
On the other face thereof, there is at least one circular cord 20 for providing linear contact with the belleville spring 7. The cord 20 is located opposite to the friction surface 22.
As illustrated in Figure 2, the cord 20 is discontinuous. Alternatively, the cord can be continuous.
On an imaginary plane 50 located between the cord 20 and the friction surface 22, grooves 30 are provided which allow passage of air which is the cooling fluid. These grooves 30 extend from the outer diameter 42 of the pressure plate 1 towards the inner diameter 40 of the pressure plate 1.
This extending may be in the form of a arc or a curve. Pluralities of grooves 30 or ventilation grooves 30 are provided in arc form around the pressure plate 1. Said grooves can be provided in circular or rectangular cross section in different embodiments. When said grooves are provided in rectangular cross section, greater heat convection area is provided when compared with the circular cross section. Due to production limitations, the corner passages of the rectangle shall be rounded.

In Figure 3, the representative cross sectional view of the pressure plate 1 of Figure 2 is given. In the pressure plate 1, said grooves 30 are provided on a plane which is parallel with respect to the friction surface 22. Preferably the axis of said arc shaped grooves 30 is parallel with respect to the axis 5 of the pressure plate 1. The axis of said arc shaped grooves 30 is arranged radially offset in relation to the axis of revolution 5.

In Figure 4, the representative upper cross sectional view of the pressure plate 1 of Figure 2 is given. At least one symmetry plane 52 passes through the axis 5 of the pressure plate 1. As a preferred embodiment, the symmetry of the groove 30 which is in arc form with respect to the symmetry plane 52 is provided. Symmetry group consisting of the grooves 30, the symmetry groove 32 and the symmetry plane 52 are provided plural along the periphery of the pressure plate 1. As a practical application, preferably 15 degrees angle is provided between the two symmetry groups. Pluralities of circular symmetry groups are provided around the pressure plate 1 in a manner completing 360 degrees. Thus, since the adjacent grooves 30 intersect the symmetry grooves 32, thus forms pluralities of columns 34. The edges and corners of said columns 34 are realized with a determined radius. Due to the strength limitations, said grooves 30 do not extend until the outer diameter 42 at the ear regions. In case the angle, existing between the two symmetry groups, is smaller than 15 degrees, the strength decreases. Therefore, angles under 15 degrees are not preferred because of reasons of quality.

In the subject matter pressure plate 1, the surface area in the inner region of the pressure plate 1 is increased since pluralities of grooves 30 form symmetry groove 32 on a parallel plane onto preferably the friction surface 22. As a result of this, the amount of heat transmitted by means of convection together with the increase of the heat convection area is increased. Since the subject matter pressure plate 1 is connected to the crank shaft, it rotates during operation of the engine. During rotation, the inner and outer surfaces of the pressure plate 1 transmit the heat to the air in the environment by means of forced convection. Since heat is eliminated from the pressure plate 1, the increase of the temperature in the pressure plate 1 is prevented. Thanks to the present invention, the pressure plate 1 is prevented from reaching high temperatures and thus, the cracks and breakages which may occur at excessive temperatures are prevented and the deteriorations which may occur in the friction lining material are prevented. Thanks to the present invention, it has been observed that the heat convection surface increases up to 70% as a result of the usage of the groove group when compared with pressure plate without groove which is frequently used, and 18% decrease of mass is observed in the pressure plate 1. Said pressure plate 1 can be produced by means of known casting methods. Since the increase of the thermal performance is provided with compromising mass, this will provide positive effect in carbon dioxide emission and reduction in power consumed in the rotary pieces and reduction in fuel consumption.

In a similar manner, in vehicles having internal combustion engines, peripheral inertia plates are used in order to regulate the irregularities of the engine. The vehicles, having manual gear box, have a dry clutching mechanism. This inertia plate is connected to the crank shaft preferably through a peripheral flange provided on a face of the inertial plate. On the other face of the inertia plate, there is a friction surface. The friction linings provided in this clutch realize torque transmission by means of tightening between the pressure plate and the flywheel. The power, resulting from friction, is also stored as heat in the flywheel in a similar manner to the pressure plate, As described in a detailed manner in the pressure plate above, the heat transfer surface area increases since grooves are formed which extend in curved form from the outer diameter of the flywheel to the inner diameter of the flywheel and since these grooves are symmetrical with respect to each other. Multiplying the subject matter grooves around the flywheel is a preferred application. Due to strenght limitations, it is preferred that the angle between the sequential symmetry axes is not less than 15 degrees. Thus, since the subject matter grooves 30, 32 are also applied to the inertia plate corresponding to flywheel, the formation of said problems in the flywheel is prevented.

## Claims

1. A plate (1) in order to be used in a friction clutch mechanism provided between the engine and the gear box in motor vehicles and comprising an annular body having inner diameter (40) and outer diameter (42),
at least one friction surface (22) in order to contact with the friction disc,
at least one ventilation groove (30) provided on an imaginary plane (50) defined in a parallel manner in axial distance with respect to said friction surface (22) and provided along a curve extending from the inner diameter (40) of said body towards the outer diameter (42) of said body,
**characterized in that** the said plate comprises a symmetry groove (32) symmetrical to the groove (30) with respect to a symmetry plane (52) which is perpendicular to said imaginary plane (50).

2. A plate according to claim 1, wherein the symmetry plane (52) passes through the axis of revolution (5) of the plate.

3. A plate according to claim 1 or 2, wherein groove group, which consists of said ventilation groove (30) and said symmetry groove (32) and said symmetry plane (52), is multiplied peripherally around said body.

4. A plate according to claim 3, wherein at least 15 degrees are provided between two adjacent symmetry planes (52).

5. A plate according to any one of the preceding claims, wherein in order to increase the convection area, said ventilation groove (30) has a circular or rectangular cross section.

6. A plate according to any one of the claims 2 to 5, the ventilation groove (30) is provided in arc form and the axis of the arc form is arranged radially offset in relation to the axis of revolution (5).

7. A plate according to any one of the preceding claims, wherein the ventilation groove (30) and the symmetry groove (32) cross each other along the symmetry plane (52).

8. A plate according to any one of the preceding claims, is a pressure plate.

9. A plate according to any one of the claims 1 to 7, is an inertia plate.

10. A friction clutch mechanism comprising a cover (6), a belleville spring (7) mounted inside of the cover (6) and a pressure plate (1) according to any one of the claims 1 to 8, said pressure plate comprising means (20) for providing linear contact with the belleville spring (7).

11. A friction clutch mechanism according to the preceding claim, wherein means (20) are a circular cord (20).

12. A friction clutch mechanism according to the preceding claim, wherein on the imaginary plane (50) located between the cord (20) and the friction surface (22), grooves (30; 32) are provided which allow passage of air for the cooling.

## Patentansprüche

1. Platte (1) zur Verwendung in einem Reibungskupplungsmechanismus, der vorgesehen ist zwischen dem Motor und dem Getriebe in Kraftfahrzeugen, und einen ringförmigen Körper mit einem Innendurchmesser (40) und einem Außendurchmesser (42) umfasst,
mindestens eine Reibungsoberfläche (22), um die Reibungsscheibe zu kontaktieren,
mindestens eine Lüftungsnut (30), bereitgestellt auf einer imaginären Ebene (50), definiert in einer parallelen Weise in einem axialen Abstand mit Bezug auf die Reibungsoberfläche (22) und bereitgestellt entlang einer Kurve, die sich von dem Innendurchmesser (40) des Körpers in Richtung des Außendurchmessers (42) des Körpers erstreckt,
**dadurch gekennzeichnet, dass** die Platte eine Symmetrienut (32) umfasst, die in Bezug auf eine Symmetrieebene (52), die senkrecht zu der imaginären Ebene (50) ist, symmetrisch zu der Nut (30) ist.

2. Platte nach Anspruch 1, wobei die Symmetrieebene (52) durch die Drehachse (5) der Platte verläuft.

3. Platte nach Anspruch 1 oder 2, wobei die Nutengruppe, die aus der Lüftungsnut (30) und der Symmetrienut (32) und der Symmetrieebene (52) besteht, um den Körper peripher multipliziert wird.

4. Platte nach Anspruch 3, wobei mindestens 15 Grad zwischen zwei aneinander angrenzenden Symmetrieebenen (52) bereitgestellt sind.

5. Platte nach einem der vorangehenden Ansprüche, wobei die Lüftungsnut (30) zum Vergrößern der Konvektionsfläche einen runden oder rechteckigen Querschnitt hat.

6. Platte nach einem der Ansprüche 2 bis 5, wobei die Lüftungsnut (30) in Bogenform bereitgestellt ist und die Achse der Bogenform in Bezug auf die Drehachse (5) radial versetzt angeordnet ist.

7. Platte nach einem der vorangehenden Ansprüche, wobei die Lüftungsnut (30) und die Symmetrienut (32) einander entlang der Symmetrieebene (52) kreuzen.

8. Platte nach einem der vorangehenden Ansprüche, die eine Druckplatte ist.

9. Platte nach einem der Ansprüche 1 bis 7, die eine Trägheitsplatte ist.

10. Reibungskupplungsmechanismus, der eine Abdeckung (6), eine im Inneren der Abdeckung (6) montierte Belleville-Feder (7) und eine Druckplatte (1) nach einem beliebigen der Ansprüche 1 bis 8 umfasst, wobei die Druckplatte Mittel (20) zum Bereitstellen eines linearen Kontakts mit der Belleville-Feder (7) umfasst.

11. Reibungskupplungsmechanismus nach dem vorangehenden Anspruch, wobei das Mittel (20) ein rundes Seil (20) ist.

12. Reibungskupplungsmechanismus nach dem vorangehenden Anspruch, wobei auf der imaginären Ebene (50) zwischen dem Seil (20) und der Reibungsoberfläche (22) Nuten (30; 32) vorgesehen sind, die eine Passage von Luft zum Kühlen gestatten.

## Revendications

1. Une plaque (1) destinée à être utilisée dans un mécanisme d'embrayage à friction prévu entre le moteur et la boîte de vitesses dans des véhicules à moteur et comprenant un corps annulaire ayant un diamètre intérieur (40) et un diamètre extérieur (42),
au moins une surface de friction (22) pour entrer en contact avec le disque de friction,
au moins une rainure de ventilation (30) prévue sur un plan imaginaire (50) défini par rapport à la surface de friction (22) de manière parallèle selon une distance axiale et disposée le long d'une courbe s'étendant depuis le diamètre intérieur (40) dudit corps vers le diamètre extérieur (42) dudit corps,
**caractérisé en ce que** ladite plaque comprend une rainure de symétrie (32) symétrique par rapport à la rainure (30) selon un plan de symétrie (52) qui est perpendiculaire audit plan imaginaire (50).

2. Plaque selon la revendication 1, dans laquelle le plan de symétrie (52) passe par l'axe de révolution (5) de la plaque.

3. Plaque selon la revendication 1 ou 2, dans laquelle le groupe de rainures, qui est constitué de ladite rainure de ventilation (30) et de ladite rainure de symétrie (32) et dudit plan de symétrie (52), est multiplié sur la périphérie autour dudit corps.

4. Plaque selon la revendication 3, dans laquelle au moins 15 degrés sont prévus entre deux plans de symétrie (52) adjacents.

5. Plaque selon l'une quelconque des revendications précédentes, dans laquelle, pour augmenter la zone de convection, ladite rainure de ventilation (30) a une section transversale circulaire ou rectangulaire.

6. Plaque selon l'une quelconque des revendications 2 à 5, la rainure de ventilation (30) est prévue sous forme d'arc et l'axe de la forme d'arc est décalé radialement par rapport à l'axe de révolution (5).

7. Plaque selon l'une quelconque des revendications précédentes, dans laquelle la rainure de ventilation (30) et la rainure de symétrie (32) se croisent le long du plan de symétrie (52).

8. Plaque selon l'une quelconque des revendications précédentes, est un plateau de pression.

9. Plaque selon l'une quelconque des revendications 1 à 7, est un volant d'inertie.

10. Mécanisme d'embrayage à friction comprenant un couvercle (6), un ressort Belleville (7) monté à l'intérieur du couvercle (6) et un plateau de pression (1) selon l'une quelconque des revendications 1 à 8, ledit plateau de pression comprenant des moyens (20) pour assurer un contact linéaire avec le ressort Belleville (7) .

11. Mécanisme d'embrayage à friction selon la revendication précédente, dans lequel les moyens (20) sont formés par un cordon circulaire (20).

12. Mécanisme d'embrayage à friction selon la revendication précédente, dans lequel, sur le plan imaginaire (50) situé entre le cordon (20) et la surface de friction (22), sont prévues des rainures (30; 32) permettant un passage d'air pour le refroidissement.
